(19) **Europäisches Patentamt**

**European Patent Office**

**Office européen des brevets**

(11) **EP 0 855 417 B1**

(12) **EUROPÄISCHE PATENTSCHRIFT**

(45) Veröffentlichungstag und Bekanntmachung des Hinweises auf die Patenterteilung:
**28.06.2000   Patentblatt 2000/26**

(51) Int Cl.$^7$: **C08G 65/28**

(21) Anmeldenummer: **98100508.5**

(22) Anmeldetag: **14.01.1998**

(54) **Verfahren zur Herstellung von Polyetherpolyolen**

Process for preparing polyether polyols

Procédé de préparation de polyétherpolyols

(84) Benannte Vertragsstaaten:
**BE DE ES FR GB IT NL**

(30) Priorität: **27.01.1997   DE 19702787**

(43) Veröffentlichungstag der Anmeldung:
**29.07.1998   Patentblatt 1998/31**

(73) Patentinhaber: **BAYER AG**
**51368 Leverkusen (DE)**

(72) Erfinder:
• **Hofmann, Jörg, Dr.**
  **47829 Krefeld (DE)**
• **Gupta, Pramod, Dr.**
  **50181 Bedburg (DE)**
• **Pielartzik, Harald, Dr.**
  **47800 Krefeld (DE)**

(56) Entgegenhaltungen:
**EP-A- 0 212 820**          **WO-A-95/02625**
**US-A- 4 543 430**

**Beschreibung**

Die Erfindung betrifft ein Verfahren zur Herstellung von Polyetherpolyolen durch Katalyse mit lewis-sauren Metallperfluoralkylsulfonaten.

Polyetherpolyole sind erhältlich durch Polyaddition von Alkylenoxiden, wie z.B. Ethylenoxid, Propylenoxid, Butylenoxid, an aktive Wasserstoffatome aufweisende Verbindungen, wie Alkohole, Amine, Säureamide, Phenole, und werden unter anderem zur Herstellung von Polyurethankunststoffen, Tensiden und Schmierstoffen verwendet. Die Polyaddition von Epoxiden an Startverbindungen erfolgt technisch üblicherweise durch Alkalikatalyse. Die überwiegend angewandten Alkali-Katalysatoren sind Alkalihydroxide. Nachteilig bei der durch Alkalihydroxide katalysierten Polyetherpolyol-Herstellung sind die langen Reaktionszeiten (> 5 Stunden) und die aufwendige Produktaufarbeitung bedingt durch Neutralisation des alkalischen Polymerisates (siehe z.B. US 4 129 718, US 4 482 750, US 4 029 879, JP 73 26 391, Encyclopedia of Polymer Science & Eng., Vol. 6, New York 1986, Seite 273 - 307). Problematisch ist außerdem die als Nebenreaktion ablaufende basenkatalysierte Umlagerung von Epoxiden, beispielsweise Propylenoxid, zu Allyl- bzw. Propenylalkoholen, die zu monofunktionellen Polyethern mit endständiger Doppelbindung führt.

Neben der basischen Katalyse ist für die Polyaddition von Alkylenoxiden an Startverbindungen seit langem auch die saure Katalyse, insbesondere mit Lewis-Säuren, wie z.B. Bortrifluorid, bekannt. Die saure Katalyse für die Polyetherpolyol-Herstellung hat den Nachteil, daß sie Nebenreaktionen (z.B. die Bildung flüchtiger, niedermolekularer Ringether) in erhöhtem Maße begünstigt, daß Hydroxylgruppen durch Säureanionen substituiert sind und daß die Molmassenverteilung der Polyole breiter ist als bei den durch Basenkatalyse hergestellten Produkten. Nachteilig ist außerdem die schwere Abtrennbarkeit (lewis-) saurer Katalysatoren sowie deren Hydrolyseempfindlichkeit, was den Einsatz spezieller Werkstoffe (z.B. Emaile) in den verwendeten Reaktionsapparaturen notwendig macht. Darüber hinaus gestaltet sich die Reaktionskontrolle aufgrund der hohen Katalyseaktivität schwierig.

Weiterhin ist aus US-Patent 4 543 430 die Herstellung von Anlagerungsprodukten aus Alkylenoxid oder Epichlorhydrin und Hydroxylgruppen aufweisenden Verbindungen in Gegenwart von Trifluormethansulfonsäuresalzen (Triflaten) der Alkalimetalle, der Metalle der 2. Gruppe des Periodensystems der Elemente sowie der Elemente Aluminium, Cobalt, Nickel, Zirkonium und Zinn bekannt. Bevorzugt ist dabei die Verwendung von Aluminium- und Zinktriflat. Für eine hohe Selektivität des Prozesses ist allerdings ein großer Uberschuß an Hydroxylgruppen aufweisenden Verbindungen erforderlich (siehe Spalte 2, Zeilen 51 - 53 in US 4 543 430). Der in US 4 543 430 beschriebene Prozeß ist zur Herstellung von Polyetherpolyolen durch Polyaddition von Alkylenoxiden an aktive Wasserstoffatome aufweisende Verbindungen (Startverbindungen) ungeeignet, da hierbei ein sehr hoher Anteil unerwünschter Nebenprodukte (z.B. niedermolekularer Ringether wie 1,3-Dioxolane und 1,4-Dioxane) entsteht und die erhaltenen Polyetherpolyole aufgrund der hohen Nebenproduktrate dunkelbraun gefärbt sind (siehe Vergleichsbeispiel 7).

In EP-A 212 820 wird die Herstellung von Glykolethern durch Reaktion eines Alkylenoxides mit einem Alkohol in Gegenwart eines Aluminium-perfluorsulfonsäurepolymerkatalysators beschrieben. Für eine hohe Selektivität des 1:1-Adduktes ist ebenfalls ein großer Überschuß des Alkohols notwendig (siehe Beispiel 3 in EP-A 212 820).

Zur Erhöhung der Selektivität wird in EP-A 569 331 ein Verfahren zur Herstellung von Anlagerungsprodukten durch Umsetzung eines Alkohols mit einer Epoxidverbindung vorgeschlagen, bei dem als Katalysator eine komplexe Metallverbindung eines Metalls der Haupt- oder Nebengruppen des Periodensystems der Elemente mit Sulfonatresten einer perfluorhaltigen Alkansulfonsäure sowie mindestens einem schwach gebundenen, neutralen, uni- oder multidentalen Liganden verwendet wird. Besonders geeignet für dieses Verfahren ist eine Metallkomplexverbindung der Formel La(CH$_3$CN)$_x$(H$_2$O)$_Y$(CF$_3$SO$_3$)$_3$ (siehe Anspruch 12 in EP-A 569 331). Nachteil dieser Metallkomplexkatalysatoren für den Prozeß der Polyetherpolyolherstellung ist die schwierige Abtrennung und vollständige Rückgewinnung des komplexen Systems aus Metallperfluoralkylsulfonat und Liganden aus dem Polyol-Reaktionsgemisch sowie die geringe katalytische Aktivität dieser Metallkomplexverbindungen, so daß für den Prozeß der Polyether-Herstellung große Katalysatormengen eingesetzt werden müssen (siehe Vergleichsbeispiel 9). Die Polyether-Herstellung mit diesen Metallkomplexverbindungen wäre deshalb sehr unwirtschaftlich.

In WO 95/02625, WO 95/02626 und WO 96/13540 wird die Polymerisation von cyclischen Ethern (Oxiranen, Oxetanen, Tetrahydrofuranen, Oxepanen, 1,3-Dioxolanen oder 1,3,5-Trioxanen) zu linearen Polyethern durch Katalyse mit Metallperfluoralkylsulfonaten bei gleichzeitiger Anwesenheit eines Beschleunigers (Cokatalysators) (z.B. eines Carbonsäureanhydrids, einer Carbonsäure, eines Säurechlorids, eines Vinylethers, bestimmter Phosphor- oder Siliziumverbindungen) beschrieben. Besonders bevorzugte Metalle sind Scandium, Yttrium und die Seltenen Erdmetalle Ytterbium, Dysprosium, Erbium, Neodym und Lanthan (siehe WO 96/13540, Seite 6, Zeile 35 und Seite 7, Zeilen 1-2). Es wird empfohlen, protische Verbindungen (z.B. Wasser und Alkohole) durch geeignete Maßnahmen (z.B. Trocknen der Ausgangsmaterialien) sorgfältig auszuschließen (siehe Seite 8, Zeilen 23 - 27 in WO 96/13540), so daß der beschriebene Prozeß daher nicht zur Herstellung von Polyetherpolyolen durch Polyaddition von Epoxiden an Startverbindungen mit aktiven Wasserstoffatomen geeignet ist.

Es war daher die Aufgabe der vorliegenden Erfindung, ein Verfahren zur Herstellung von Polyetherpolyolen zu entwickeln, das die oben genannten Nachteile weitestgehend vermeidet.

Überraschend wurde jetzt gefunden, daß die Perfluoralkylsulfonsäuresalze (Perfluoralkylensulfonate) der Metalle der Gruppe III A des Periodensystems der Elemente (entsprechend der IUPAC-Konvention von 1970) ohne gleichzeitige Anwesenheit von Liganden oder Beschleunigern mit hoher Selektivität und katalytischer Aktivität die Polyaddition von Epoxiden an Startverbindungen mit aktiven Wasserstoffatomen ermöglichen. Weiterhin wurde gefunden, daß die Anwesenheit der in WO 95/02625, 95/02626 und 96/13540 genannten Beschleuniger nachteilig für den Prozeß der Polyetherpolyol-Herstellung ist, da bei deren Zugabe bei vergleichbaren Reaktionsgeschwindigkeiten eine deutliche Zunahme unerwünschter Nebenreaktionen (Bildung niedermolekularer Ringether) auftritt (siehe Vergleichsbeispiele 2 und 3).

Gegenstand der vorliegenden Erfindung ist somit ein Verfahren zur Herstellung von Polyetherpolyolen durch sauer katalysierte Polyaddition von Alkylenoxiden an aktive Wasserstoffatome aufweisenden Verbindungen, das dadurch gekennzeichnet ist, daß man die Polyaddition in Gegenwart von Perfluoralkylsulfonsäuresalzen (Perfluoralkylsulfonaten) der Metalle der Gruppe III A des Periodensystems der Elemente (entsprechend der IUPAC-Konvention von 1970) bei Temperaturen von 40 bis 200°C bei Normaldruck oder Drücken von 0 bis 20 bar (absolut) gegebenenfalls in Gegenwart eines inerten, organischen Lösungsmittels durchführt.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann nur mit einem monomeren Epoxid durchgeführt werden, aber auch statistisch oder auch blockweise mit zwei oder drei unterschiedlichen monomeren Epoxiden erfolgen. Näheres ist "Ullmanns Encyclopädie der industriellen Chemie", englischsprachige Ausgabe, 1992, Band A21, Seiten 670 - 671, zu entnehmen.

Als Starter (aktive H-Atome aufweisende Verbindungen) werden Verbindungen mit Molekulargewichten von 18 bis 400 und 1 bis 8 Hydroxyl-, Thiol- und/oder Aminogruppen verwendet. Beispielhaft seien genannt: Ethylenglykol, Diethylenglykol, 1,2-Propylenglykol, 1,4-Butandiol, Hexamethylenglykol, Bisphenol A, Trimethylolpropan, Glyzerin, Pentaerythrit, Sorbit, Rohrzucker, abgebaute Stärke, Wasser, Methylamin, Ethylamin, Propylamin, Butylamin, Anilin, Benzylamin, o- und p-Toluidin, $\alpha,\beta$-Naphthylamin, Ammoniak, Ethylendiamin, Propylendiamin, 1,4-Butylendiamin, 1,2-, 1,3-, 1,4-, 1,5- und/oder 1,6-Hexamethylendiamin, wie o-, mund p-Phenylendiamin, 2,4-, 2,6-Toluylendiamin, 2,2'-, 2,4- und 4,4'-Diaminodiphenylmethan und Diethylendiamin.

Als Katalysatoren werden erfindungsgemäß Perfluoralkylsulfonate der Metalle der Gruppe III A des Periodensystems der Elemente (entsprechend der IUPAC-Konvention von 1970) eingesetzt. Das beinhaltet die Metalle Scandium, Yttrium und die Seltenen Erdmetalle Lanthan, Cer, Praseodym, Neodym, Promethium, Samarium, Europium, Gadolinium, Terbium, Dysprosium, Holmium, Erbium, Thulium, Ytterbium und Luthetium. Als weiteres Metall kann "Mischmetall" (auch Didymium" genannt), eine Mischung von aus Erz gewonnenen Seltenen Erdmetallen, eingesetzt werden.

Unter Perfluoralkylsulfonaten versteht man die Metallsalze von Perfluoralkylsulfonsäuren, in denen das Metall mindestens an eine Perfluoralkylsulfonatgruppe gebunden ist. Daneben können auch andere geeignete Anionen vorhanden sein. Die Perfluoralkylsulfonatgruppen können ihrerseits an einer Polymermatrix gebunden sein. Bevorzugt sind die Metallsalze der Trifluormethansulfonsäure, die als Trifluormethansulfonate oder Triflate bezeichnet werden. Bevorzugt werden eingesetzt: Scandium-, Yttrium-, Lanthan-, Cer-, Prascodym-, Neodym-, Samarium-, Europium-, Gadolinium-, Terbium-, Dysprossium-, Holmium-, Erbium-, Thulium-, Ytterbium- und Luthetiumtriflat.

Die durch die Metallperfluoralkylsulfonate katalysierte Polyaddition erfolgt im Temperaturbereich von 40 bis 200°C, bevorzugt im Bereich von 40 bis 160°C, besonders bevorzugt von 50 bis 150°C, bei Normaldruck oder Drücken von 0 bis 20 bar (absolut). Der Prozeß kann in Substanz oder in einem inerten organischen Lösungsmittel, wie z.B. Cyclohexan, Toluol, Xylol, Diethylether, Dimethoxyethan und/oder chlorierten Kohlenwasserstoffen, wie Methylenchlorid, Chloroform oder 1,2-Dichlorpropan, durchgeführt werden. Die Menge an Lösungsmittel beträgt üblicherweise ca. 10 bis 30 %.

Die Katalysatorkonzentration wird so gewählt, daß unter den gegebenen Reaktionsbedingungen eine gute Beherrschung der Polyadditionsreaktion möglich ist. Die Katalysatorkonzentration liegt im Bereich von 0,0005 Gew.-% bis 10 Gew.-%, bevorzugt im Bereich von 0,001 Gew.-% bis 5 Gew.-%, bezogen auf die Menge des herzustellenden Alkylenoxidadduktes.

Die Reaktionszeiten für die Polyaddition liegen im Bereich von wenigen Minuten bis zu mehreren Tagen, bevorzugt bei einigen Stunden.

Die Molekulargewichte der nach dem erfindungsgemäßen Verfahren hergestellten Polyether liegen im Bereich von 100 bis 20.000 g/Mol, bevorzugt im Bereich von 200 bis 15.000 g/Mol. Aufgrund der Stabilität der als Katalysator eingesetzten Metallperfluoralkylsulfonate, insbesondere der Triflate, gegenüber Verbindungen mit aktiven Wasserstoffatomen (z.B. Wasser, Alkohole) müssen in den verwendeten Reaktionsapparaturen keine speziellen Werkstoffe (z.B. Emaile) eingesetzt werden.

Der Polyadditionsprozeß kann kontinuierlich, in einem Batch- oder im Semi-Batch-Verfahren durchgeführt werden.

Es wurde zuvor bereits angesprochen, daß bei der Herstellung von Polyetherpolyolen durch Polyaddition von Epoxiden an Startverbindungen durch saure bzw. lewis-saure Katalyse, die Hydroxylgruppen der Polyole häufig durch Säureanionen substituiert sind, daß die vollständige Abtrennung der Katalysatoren aus dem Polyol sehr schwierig ist und daß aufgrund der Hydrolyseempfindlichkeit "klassischer" lewissaurer Katalysatoren deren Wiederverwendbarkeit für weitere Polyadditionscyclen im allgemeinen nicht möglich ist.

Der Nachteil wird durch das erfindungsgemäße Verfahren behoben.

Die Aufarbeitung und Wiedergewinnung des erfindungsgemäß eingesetzten Katalysators kann in der Weise erfolgen, daß man nach erfolgter Polyadditionsreaktion durch Temperaturerniedrigung oder durch Zugabe eines Fällungsmittels ausgewählt aus aliphatischen, cycloaliphatischen oder aromatischen Kohlenwasserstoffen und/oder durch Extraktion mit Wasser den Katalysator praktisch vollständig aus dem Reaktionsgemisch entfernt.

Der Katalysator wird anschließend in üblicher Weise gereinigt und kann dann für weitere Polyadditionsreaktionen beliebig oft wiederverwendet werden. Hierbei bleibt die Katalyse-Aktivität für die Polyaddition vollständig erhalten (Beispiel 12).

Bevorzugt gestaltet sich die Katalysatorabtrennung aus dem Polyadditionsgemisch derart, daß man den bei Reaktionstemperatur (40 bis 200°C) homogen gelösten Katalysator durch Temperaturerniedrigung ausfällt. Besonders bevorzugt ist es, wenn bereits durch Abkühlen von Reaktionstemperatur (besonders bevorzugt 50 - 150°C) auf Umgebungstemperatur (Raumtemperatur) die Ausfällung des Katalysators erfolgt. Der ausgefallene Katalysator kann dann vom Polyol durch z.B. Filtration abgetrennt werden und gegebenenfalls nach Extraktion von am Filterkuchen anhaftendem Restpolyol mit einem Lösungsmittel für das Polyol (Fällungsmittel für den Katalysator, bevorzugt aliphatische, alicyclische oder aromatische Kohlenwasserstoffe) und Trocknung unter vermindertem Druck für weitere Polyadditionscyclen wieder eingesetzt werden. Bevorzugt ist die Methode der Katalysatorabtrennung durch Temperaturerniedrigung bei Einsatz relativ hoher Katalysatorkonzentrationen (0,1 - 10 Gew.-%, bezogen auf die Menge an herzustellenden Alkylenoxidaddukt) und/oder hohem Polyetherpolyol-Molekulargewicht (1000 - 15.000 g/Mol). Der Restmetallgehalt im Polyol beträgt nach Katalysatorabtrennung max. 500 ppm.

Durch Zugabe eines Fällungsmittels für das Metallperfluoralkylsulfonat kann ein weiterer Anteil des Katalysators ausgefällt und z.B. durch Filtration vom Polyol abgetrennt werden. Geeignete Fällungsmittel sind z.B. aliphatische, alicyclische oder aromatische Kohlenwasserstoffe, insbesondere aliphatische Kohlenwasserstoffe wie Pentan, Hexan, Heptan oder Petrolether. Das Fällungsmittel für den Katalysator wird, bezogen auf das Polyetherreaktionsgemisch, im Volumenverhältnis:

$$\frac{\text{Fällungsmittel}}{\text{Polyetherreaktionsgemisch}} \; \frac{100}{1} \; \text{bis} \; \frac{1}{100}, \text{ bevorzugt } \frac{10}{1} \; \text{bis} \; \frac{1}{10},$$

eingesetzt. Die Katalysatorfällung wird durch homogene Durchmischung von Fällungsmittel und Polyetherreaktionsgemisch vollzogen. Der ausgefällte Katalysator wird z.B. durch Filtration abgetrennt und kann gegebenenfalls nach Trocknen unter verringertem Druck, für weitere Polyadditionscyclen eingesetzt werden. Der Restmetallgehalt im Polyol beträgt nach Katalysatorabtrennung < 200 ppm.

Durch Extraktion mit Wasser kann der Metallperfluoralkylsulfonat-Katalysator quantitativ aus dem Polyol-Produkt isoliert werden.

Das Extraktionsmittel für den Katalysator (Wasser) wird, bezogen auf das Polyetherreaktionsgemisch im Volumenverhältnis

$$\frac{\text{Extraktionsmittel}}{\text{Polyether}} = \frac{100}{1} \; \text{bis} \; \frac{1}{1000}, \text{ bevorzugt } \frac{10}{1} \; \text{bis} \; \frac{1}{100},$$

eingesetzt. Der extrahierte Katalysator kann nach Abdestillieren des Extraktionsmittels und gegebenenfalls Trocknung des Rückstandes bei vermindertem Druck und/oder erhöhter Temperatur für weitere Polyadditionscyclen eingesetzt werden.

Der Restmetallgehalt im Polyol beträgt nach dieser Form der Katalysatorabtrennung < 10 ppm, bevorzugt < 1 ppm.

Da auch der Fluor-Restgehalt der durch Wasser extrahierten Polyole unterhalb der Nachweisgrenze der Elementaranalyse liegt, sind in den durch Metallperfluoralkylsulfonat-Katalyse hergestellten Polyetherpolyolen keine Hydroxylgruppen durch Perfluoralkylsulfonat-Anionen substituiert.

Der mittels einer der drei beschriebenen Methoden aus dem Polyol-Reaktionsgemisch abgetrennte und zurückgewonnene Katalysator kann, wie erwähnt, beliebig oft in weiteren Polyadditionscyclen wieder eingesetzt werden.

Das erfindungsgemäße Verfahren kann im allgemeinen wie folgt durchgeführt werden: Zur Herstellung von Polyetherpolyolen durch Polyaddition von Alkylenoxiden an Startverbindungen durch Katalyse mit lewis-sauren Metallperfluoralkylsulfonaten (im allgemeinen den Metalltriflaten) wurden jeweils Katalysator, Startverbindung (im allgemeinen Propylenglykol) und gegebenenfalls Lösungsmittel in einem Reaktionsgefäß vorgelegt und dann bei Drücken von 0 - 20 bar (abs.) auf die gewünschte Reaktionstemperatur (besonders bevorzugt 50 - 150°C) gebracht. Anschließend wurde die gewünschte Menge Alkylenoxid (bevorzugt Propylenoxid) mittels einer gesteuerten Membranpumpe kontinuierlich in das Reaktionsgefäß dosiert.

Nach vollständiger Epoxiddosierung und Nachreaktionszeit bei vorgegebener Reaktionstemperatur wurden flüchtige Anteile bei 90°C/30 min unter vermindertem Druck (1 mbar) abdestilliert und gaschromatographisch analysiert.

Zur Isolierung der Produkte und Abtrennung des Katalysators wurde auf niedrigere Temperatur (im allgemeinen Raumtemperatur) abgekühlt, wobei ein Teil des bei Reaktionstemperatur homogen gelösten Katalysators ausfiel und durch Filtration abgetrennt werden konnte; anschließend wurde ein Fällungsmittel (z.B. Hexan) zugegeben, der ausgefallene Katalysator abfiltriert und das Fällungsmittel vom Polyether abdestilliert.

Die erhaltenen Polyetherpolyole sind farblose bis gelbgefärbte, viskose Flüssigkeiten, die durch Ermittlung der OH-Zahlen sowie der mittleren Molmassen und Molmassenverteilungen $M_w/M_n$ (MALDI - TOF - MS) charakterisiert wurden.

## Beispiele

### Beispiel 1

Propylenoxid-Polymerisation mit Yttrium(III)triflat-Katalyse und Propylenglykol-Starter:

In einem beheizbaren Planschlifftopf mit Rührer und Rückflußkühler wurden 1,58 g (20,8 mMol) Propylenglykol, 0,037 g (0,069 mMol) Yttrium(III)triflat und 1,8 g Toluol vorgelegt und anschließend auf 90°C aufgeheizt. Dann wurden bei 90°C innerhalb von 16 Stunden 24,1 g (415 mMol) Propylenoxid mittels einer temperaturgesteuerten Membranpumpe kontinuierlich unter Normaldruck in das Reaktionsgefäß dosiert. Nach vollständiger Propylenoxiddosierung und 5 h Nachreaktionszeit bei 90°C wurden flüchtige Anteile bei 90°C/30 min/ 1mbar abdestilliert. Nach Abkühlen auf Raumtemperatur und Zugabe von 50 ml Hexan wurde der gefällte Katalysator abfiltriert und das Hexan anschließend vom Polyether abdestilliert.

| flüchtige Anteile | | 6,0 % |
|---|---|---|
| Polyetherpolyol | Farbe | hellgelb |
| | OHZ (mg KOH/g) | 104 |
| | $M_n$ | 1086 |
| | $M_w/M_n$ | 1,13 |

### Vergleichsbeispiel 2

Propylenoxid-Polymerisation mit Yttrium(III)triflat-Katalyse und Propylenglykol-Starter bei Anwesenheit von Essigsäure (Beschleuniger):

Wie Beispiel 1, jedoch mit

- Vorlage von zusätzlichen 0,069 mMol Essigsäure
- Dosierung von 36,2 g (623 mMol) Propylenoxid innerhalb 18 Std

| flüchtige Anteile | | 15,9 % |
|---|---|---|
| Polyetherpolyol | Farbe | hellgelb |
| | OHZ (mg KOH/g) | 142 |
| | Mn | 1037 |
| | $M_w/M_n$ | 1,14 |

**Vergleichsbeispiel 3**

Propylenoxid-Polymerisation mit Yttrium(III)triflat-Katalyse und Propylenglykol-Starter bei Anwesenheit von Acetanhydrid (Beschleuniger):

Wie Beispiel 1, jedoch mit

- Vorlage von 3,29 g (43,3 mMol) Propylenglykol
- Vorlage von zusätzlich 0,069 mMol Acetanhydrid
- Dosierung von 33,6 g (578 mMol) Propylenoxid innerhalb 14 Stunden

| flüchtige Anteile Polyetherpolyol | | 9,1 % |
|---|---|---|
| | Farbe | hellgelb |
| | OHZ (mg KOH/g) | 150 |
| | Mn | 783 |
| | $M_w/M_n$ | 1,11 |

Vergleichsbeispiele 2 und 3 verdeutlichen, daß bei der Yttrium(III)triflat-Katalyse für die Polypropylenglykol-Herstellung die gleichzeitige Anwesenheit von Beschleunigern (Cokatalysatoren), die in WO 95/02625 für die Polymerisation cyclischer Ether beschrieben sind, zu einer deutlichen Zunahme unerwünschter flüchtiger Nebenprodukte führt.

**Beispiel 4**

Propylenoxid-Polymerisation mit Ytterbium(III)triflat-Katalyse und Propylenglykol-Starter:

Wie Beispiel 1, jedoch mit

- Vorlage von 0,043 g (0,069 mMol) Ytterbium(III)triflat
- Dosierung von 21,6 g (371 mMol) Propylenoxid während 14 Stunden

| flüchtige Anteile Polyetherpolyol | | 5,0 % |
|---|---|---|
| | Farbe | hellgelb |
| | OHZ (mg KOH/g) | 108 |
| | $M_n$ | 1207 |
| | $M_w/M_n$ | 1,14 |

**Beispiel 5**

Propylenoxid-Polymerisation mit Gadolinium(III)triflat-Katalyse und Propylenglykol-Starter:

Wie Beispiel 1, jedoch mit

- Vorlage von 0,042 g (0,069 mMol) Gadolinium(III)triflat
- Dosierung von 21,7 g (373 mMol) Propylenoxid in 20 Stunden

| flüchtige Anteile Polyetherpolyol | | 9,4 % |
|---|---|---|
| | Farbe | hellgelb |
| | OHZ (mg KOH/g) | 98 |
| | $M_n$ | 1290 |
| | $M_w/M_n$ | 1,18 |

### Beispiel 6

Propylenoxid-Polymerisation mit Lutetium(III)triflat-Katalyse und Propylenglykol-Starter:

Wie Beispiel 1, jedoch mit

- Vorlage von 0,043 g (0,069 mMol) Lutetium(III)triflat
- Dosierung von 25,2 g (433 mMol) Propylenoxid in 14,5 Stunden

| flüchtige Anteile Polyetherpolyol | | 10,8 % |
|---|---|---|
| | Farbe | hellgelb |
| | OHZ (mg KOH/g) | 101 |
| | Mn | 950 |
| | $M_w/M_n$ | 1,07 |

### Vergleichsbeispiel 7

Propylenoxid-Polymerisation mit Aluminium(III)triflat-Katalyse und Propylenglykol-Starter:

Wie Beispiel 1, jedoch mit

- Vorlage von 0,033 g (0,069 mMol) Aluminium(III)triflat
- Dosierung von 30,9 g (532 mMol) Propylenoxid während 15,5 Stunden

| flüchtige Anteile Polyetherpolyol | | 20,8 % |
|---|---|---|
| | Farbe | dunkelbraun |
| | OHZ (mg KOH/g) | 91 |
| | $M_n$ | 953 |
| | $M_w/M_n$ | 1,07 |

Ein Vergleich zwischen den Beispielen 1,4,5,6 und dem Vergleichsbeispiel 7 macht deutlich, daß bei der Polypropylenglykol-Herstellung durch Katalyse mit dem im US-Patent 4 543 430 für die Herstellung von Anlagerungsprodukten aus Alkylenoxiden und Hydroxylgruppen aufweisenden Verbindungen bevorzugt verwendeten Aluminium(III)triflat eine deutliche Zunahme der Bildung unerwünschter flüchtiger Nebenprodukte sowie eine unerwünschte dunkelbraune Verfärbung des erhaltenen Polyetherpolyols auftritt.

### Beispiel 8

Propylenoxid-Polymerisation mit Lanthan(III)triflat-Katalyse und Propylenglykol-Starter:

Wie Beispiel 1, jedoch mit

- Vorlage von 0,202 g Lanthan(III)triflat
- Vorlage von 4,5 g Toluol als Lösungsmittel
- Dosierung von 17,5 g (302 mMol) Propylenoxid während 19 Stunden

| flüchtige Anteile Polyetherpolyol | | 7,9 % |
|---|---|---|
| | Farbe | farblos |
| | OHZ (mg KOH/g) | 116 |
| | $M_n$ | 1021 |
| | $M_w/M_n$ | 1,11 |

**Vergleichsbeispiel 9:**

Propylenoxid-Polymerisation mit Propylenglykol-Starter und Katalyse durch $La(CH_3CN)_x(H_2O)_Y(CF_3SO_3)_3$ (Synthese gemäß EP A 569 331; Zeilen 14 - 21, Seite 7, La-Gehalt: 24,1 %; C-Gehalt: 9,27 %; N-Gehalt: 1,96 %)

Wie Beispiel 1, jedoch mit

- Vorlage von 0,404 g $La(CH_3CN)_x(H_2O)_Y(CF_3SO_3)_3$
- Vorlage von 4,5 g Toluol als Lösungsmittel
- Dosierung von 15,2 g (262 mMol) Propylenoxid während 19 Stunden

| flüchtige Anteile Polyetherpolyol | | 3,0 % |
|---|---|---|
| | Farbe | hellgelb |
| | OHZ (mg KOH/g) | 147 |
| | $M_n$ | 854 |
| | $M_w/M_n$ | 1,07 |

Ein Vergleich zwischen Beispiel 8 und Vergleichsbeispiel 9 macht deutlich, daß die in EP A 569 331 für eine selektive Herstellung von Anlagerungsprodukten aus Alkohol und Epoxid bevorzugt verwendete Metallkomplexverbindung $La(CH_3CN)_x(H_2O)_Y(CF_3SO_3)_3$ für die Polypropylenglykolherstellung eine wesentlich geringere katalytische Aktivität besitzt als das ligandenfreie Lanthan(III)triflat $La(CF_3SO_3)_3$ und demzufolge für die Katalyse in deutlich höheren Konzentrationen eingesetzt werden muß.

**Katalysatorabtrennung und Wiederverwendung**

**Beispiel 10**

Propylenoxid-Polymerisation mit Yttrium(III)triflat-Katalyse und Propylenglykol-Starter: Katalysatorabtrennung:

Es wurden 1,58 g (20,8 mMol) Propylenglykol, 0,738 g (1,38 mMol) Yttrium(III)triflat und 1,8 g Toluol vorgelegt und auf 90°C aufgeheizt. Dann wurden bei 90°C innerhalb von 4 h 35,3 g (608 mMol) Propylenoxid zudosiert. Nach vollständiger Dosierung und 5 h Nachreaktionszeit bei 90°C wurden flüchtige Anteile bei 90°C/30 min/1mbar abdestilliert.

Katalysatorabtrennung:

- Beim Abkühlen auf Umgebungstemperatur fiel ein Teil des Katalysators aus. Nach Filtration betrug der Yttrium-Restgehalt im Polyol 380 ppm. Das entspricht einer Katalysatorabtrennung aus dem Polyol von 89,6 %.

- Durch Zugabe von 50 ml Hexan wurde ein weiterer Anteil des Katalysators ausgefällt. Nach Filtration und Abdestillieren des Hexans betrug der Yttrium-Restgehalt im Polyol 80 ppm. Dies entspricht einer Katalysatorabtrennung aus dem Polyol von 98,1 %.

- Die Polyetherpolyol-Hexan-Phase wurde vor dem Abdestillieren des Hexans mit Wasser extrahiert. Yttrium-Restgehalt im Polyol < 1 ppm. Katalysatorabtrennung aus dem Polyol: 100 %.

**Beispiel 11**

Wie Beispiel 10, jedoch mit:

- Vorlage von 0,074 g (0,138 mMol) Yttrium(III)triflat
- Dosierung von 27,4 g (472 mMol) PO während 11 h

**EP 0 855 417 B1**

Katalysatorabtrennung

- Nach Abkühlen auf Umgebungstemperatur und Zugabe von 50 ml Hexan wurde der ausgefällte Katalysator abfiltriert und das Hexan vom Polyether abdestilliert. Yttrium-Restgehalt im Polyol: 145 ppm. Katalysatorabtrennung aus dem Polyol: 68 %.

- Wäßrige Extraktion der Polyetherpolyol-Hexan-Phase:

  Yttrium-Restgehalt im Polyol: <1 ppm
  Fluor-Restgehalt im Polyol: < 50 ppm
  Katalysatorabtrennung aus dem Polyol: 100 %

**Beispiel 12:** Katalysatorwiederverwendung

Der aus Beispiel 10 nach Zugabe von Hexan gefällte Katalysator (98,1 % des eingesetzten Katalysators) wurde abfiltriert, unter reduziertem Druck (1 mbar) getrocknet und anschließend für eine zweite Polymerisation unter gleichen Reaktionsbedingungen eingesetzt. Hierbei wurden innerhalb von 4,5 h 36,2 g (623 mMol) Propylenoxid zudosiert. Dann folgte 5 h Nachreaktionszeit, Abdestillieren flüchtiger Bestandteile (90°C/30 min/1mbar), Abkühlen auf Raumtemperatur, Zugabe von 50 ml Hexan, Filtration des ausgefallenen Katalysators und Abdestillieren des Hexans.

| flüchtige Anteile Polyetherpolyol | | 14,5 % |
|---|---|---|
| | Farbe | gelb |
| | OHZ (mg KOH/g) | 93 |
| | $M_n$ | 1265 |
| | $M_w/M_n$ | 1,12 |

Zum Vergleich: Produkt aus Beispiel 10:

| flüchtige Anteile Polyetherpolyol | | 15,0 % |
|---|---|---|
| | Farbe | farblos |
| | OHZ (mg KOH/g) | 102 |
| | $M_n$ | 1227 |
| | $M_w/M_n$ | 1,06 |

**Patentansprüche**

1. Verfahren zur Herstellung von Polyetherpolyolen durch sauer katalysierte Polyaddition von Alkylenoxiden an aktive Wasserstoffatome aufweisenden Verbindungen, dadurch gekennzeichnet, daß man die Polyaddition in Gegenwart von Perfluoralkylsulfonsäuresalzen (Perfluoralkylsulfonaten) der Metalle der Gruppe III A des Periodensystems der Elemente (entsprechend der IUPAC-Konvention von 1970) bei Temperaturen von 40 bis 200°C bei Normaldruck oder Drücken von 0 bis 20 bar (absolut) gegebenenfalls in Gegenwart eines inerten, organischen Lösungsmittels durchführt.

2. Verfahren nach Anspruch 1, dadurch gekennzeichnet, daß man nach erfolgter Polyaddition durch Temperaturerniedrigung auf Raumtemperatur und/oder durch Zugabe eines Fällungsmittels ausgewählt aus aliphatischen, cycloaliphatischen oder aromatischen Kohlenwasserstoffen und/oder durch Extraktion mit Wasser den Metallperfluoralkylsulfonat-Katalysator praktisch vollständig aus dem Reaktionsgemisch entfernt.

3. Verfahren nach Ansprüchen 1 und 2, dadurch gekennzeichnet, daß man den verwendeten Katalysator aus dem Reaktionsgemisch entfernt und wieder für die Polyadditionsreaktion verwendet.

**Claims**

1. Process for the production of polyether polyols by acid-catalysed polyaddition of alkylene oxides to compounds displaying active hydrogen atoms, characterised in that the polyaddition is carried out in the presence of perfluoroalkylsulphonic acid salts (perfluoroalkylsulphonates) of the metals pertaining to Group III A of the Periodic Table of Elements (corresponding to the IUPAC Convention of 1970) at temperatures from 40 to 200°C at normal pressure or pressures from 0 to 20 mbar (absolute), optionally in the presence of an inert organic solvent.

2. Process according to Claim 1, characterised in that after polyaddition has taken place the metal perfluoroalkylsulphonate catalyst is removed practically totally from the reaction mixture by lowering the temperature to room temperature and/or by addition of a precipitating agent selected from aliphatic, cycloaliphatic or aromatic hydrocarbons and/or by extraction with water.

3. Process according to Claims 1 and 2, characterised in that the catalyst employed is removed from the reaction mixture and used again for the polyaddition reaction.

**Revendications**

1. Procédé de préparation de polyétherpolyols par polyaddition sous catalyse acide d'oxydes d'alcoylène sur des composés présentant des atomes d'hydrogène actifs, caractérisé en ce que l'on réalise la polyaddition en présence de sels d'acide perfluoroalcoylsulfonique (perfluoroalcoylsulfonates) de métaux du groupe IIIA du système périodique des éléments (correspondant à la convention IUPAC de 1970) à des températures allant de 40 à 200°C à pression normale ou à des pressions allant de 0 à 20 bar (absolu), facultativement en présence d'un solvant organique inerte.

2. Procédé suivant la revendication 1, caractérisé en ce que, après la polyaddition terminée, on écarte pratiquement complètement du mélange réactionnel, le catalyseur perfluoroalcoylsulfonate métallique, par abaissement de la température jusqu'à température ambiante et/ou par addition d'un agent de précipitation choisi parmi les hydrocarbures aliphatiques, cycloaliphatiques ou aromatiques et/ou par extraction à l'eau.

3. Procédé suivant les revendications 1 et 2, caractérisé en ce que l'on écarte le catalyseur utilisé du mélange réactionnel et on l'utilise à nouveau pour la réaction de polyaddition.